# EUROPÄISCHE PATENTSCHRIFT

(11) **EP 1 199 958 B1**
(45) Veröffentlichungstag und Bekanntmachung des Hinweises auf die Patenterteilung: **31.03.2004**
(21) Anmeldenummer: 00954489.1
(22) Anmeldetag: 13.07.2000
(51) Int. Cl.: A46B 13/00, A61C 15/00, A46B 15/00

(54) **ZAHNBÜRSTE SOWIE ZAHNBÜRSTENKOPF HIERFÜR**
TOOTHBRUSH AND TOOTHBRUSH HEAD
BROSSE A DENTS ET TETE DE BROSSE A DENTS

(30) Priorität: 04.08.1999 DE 19936637
(43) Veröffentlichungstag der Anmeldung: 02.05.2002
(73) Patentinhaber: Braun GmbH, 61476 Kronberg (DE)
(72) Erfinder: PAFFRATH, Dieter, D-82229 Seefeld (DE)
(86) Internationale Anmeldenummer: PCT/EP2000/006673
(87) Internationale Veröffentlichungsnummer: WO 2001/010268

(56) Entgegenhaltungen:
- WO-A-98/36703
- DE-A- 4 402 366
- DE-U- 29 600 255
- US-A- 1 852 480
- US-A- 4 346 492
- US-A- 5 259 083

## Beschreibung

Die vorliegende Erfindung betrifft eine Zahnbürste mit einem vorzugsweise elektrischen Antrieb zum Antreiben eines Zahnbürstenkopfes. Die Erfindung betrifft ferner einen solchen Zahnbürstenkopf, der ein Trägerstück aufweist, an dem ein Dom zur Interdentalreinigung vorgesehen ist.

Bei der Zahnreinigung und -pflege gewinnt zunehmend die Reinigung von Zahnzwischenräumen an Bedeutung. Um zur Entfernung von Zahnbelägen bzw. Plaques in nur schwer zugängliche Zahnzwischenräume einzudringen, wurden bereits wie zum Beispiel in der EP0765642 besonders gestaltete Bürstenanordnungen vorgeschlagen, bei denen Borstenbüschel entgegen der Drehrichtung des Zahnbürstenkopfes geneigt angeordnet sind, um besser in die Zahnzwischenräume eindringen zu können. Es wurden auch bereits spezielle Borstenbüschel vorgesehen, die gegenüber den weiteren Borsten des Bürstenkopfes in ihrer Länge vorspringen, eine sich zur Arbeitsspitze hin verjüngende Kontur besitzen und aus steiferen Borsten bestehen, um besser in die Zahnzwischenräume eindringen zu können.

Dokument US-A1852480 offenbart einen Zahnbürstenkopf mit einem Trägerstück, wobei an dem Trägerstück ein Dorn sowie mehrere Borsten oder Borstenbüschel angeordnet sind, und der Dorn in Richtung seiner Längsachse relativ zum Trägerstück verschieblich gelagert ist.

Dokument WO-A-9836703 zeigt einen in Richtung seiner Längsachse über einen Antrieb oszillierenden, der Reinigung der Zahnzwischenräume dienenden Dorn.

Dokumente US-A-4346492 und US-A-5259083 zeigen jeweils Zahnbürstenköpfe, deren Borstenbüschel über einen Antrieb in Richtung ihrer Längsachse oszillieren.

Dokument DE-U-29600255 zeigt einen Zahnbürstenkopf, dessen Träger mit mehreren Borsten und einem stationär angeordneten Dorn versehen ist.

Derartige Borstenbüschel, die zum Eindringen in Zahnzwischenräume vorgesehen sind, werden jedoch mechanisch besonders beansprucht und unterliegen im Laufe der Zeit einer beschleunigten Abnützung. Sie neigen zum Umbiegen. Um eine Interdentalreinigung mit größerer Standfestigkeit des Putzwerkzeuges zu erreichen, wurde bereits versucht, anstelle der entsprechenden Borstenbüschel einen Kunststoffdorn zu verwenden, mit dem in Zahnzwischenräume gefahren werden kann, um Speisereste, bakterielle Zahnbeläge, Plaques und dergleichen zu entfernen. Die Zahnreinigung mit einem solchen Dorn wird jedoch subjektiv leicht als unangenehm empfunden. Des weiteren besteht bei einem solchen Dom die Gefahr, daß beim Eindringen in Zahnfleischtaschen das Zahnfleisch verletzt wird.

Der vorliegenden Erfindung liegt daher die Aufgabe zugrunde, eine verbesserte Zahnbürste sowie einen verbesserten Zahnbürstenkopf zu schaffen, die Nachteile des Standes der Technik vemeiden und letzteren in vorteilhafter Weise weiterbilden. Insbesondere soll eine verbesserte Reinigung der Zahnzwischenräume erreicht werden, die als angenehm empfunden wird und keine Verletzungsrisiken birgt.

Hinsichtlich des Zahnbürstenkopfes wird die genannte Aufgabe erfindungsgemäß durch einen Zahnbürstenkopf gemäß Patentanspruch 1 gelöst. Hinsichtlich der Zahnbürste wird die Aufgabe erfindungsgemäß durch eine Zahnbürste gemäß Patentanspruch 11 gelöst. Bevorzugte Ausgestaltungen der Erfindung sind Gegenstand der Unteransprüche.

Der Dorn oder ein vergleichbares Mittel zur Interdentalreinigung ist in Richtung seiner Längsachse verschieblich gelagert und mit einem Stoßschutz oder einem sonstigen Mittel versehen, der oder das bei einer vorbestimmten Belastung ein Einfahren des Dorns erlaubt. Bei übergroßem Druck, zum Beispiel wenn versucht wird, den Dorn in einen zu engen Zahnzwischenraum zu drücken, fährt der Dorn ein. Der Stoßschutz hält den Dorn nur bis zu einer bestimmten Belastung in seiner ausgefahrenen Stellung. Hierdurch wird der Putzvorgang trotz des bevorzugt verschleißfesten Dornes als sanft und angenehm empfunden. Eine Verletzungsgefahr durch den Dom ist vermieden bzw. wesentlich reduziert.

In Weiterbildung der Erfindung ist der Stoßschutz reversibel ausgebildet. Es ist eine selbsttätige, insbesondere elastische Rückstellung des Dornes vorgesehen, nachdem der Stoßschutz bei einer übermäßigen Belastung gegriffen hat und der Dorn eingefahren wurde. Bei Unterschreiten der vorbestimmten Belastung wird der Dorn ausgefahren, so daß dieser bei entsprechenden Lastspielen selbstständig hin- und herfährt.

In vorteilhafter Weise kann eine Federeinrichtung vorgesehen sein, die den Dorn zu seiner ausgefahrenen Stellung hin vorspannt. In Weiterbildung der Erfindung ist eine Spiralfeder zur Federbeaufschlagung des Doms vorgesehen, die vorzugsweise im Inneren des Doms angeordnet sein kann.

Der Dorn kann auch in sich stauchbar ausgebildet sein, das heißt, der Dorn besitzt einen Stauchungsteil, der integral einen Teil des Domkorpus bildet. Insbesondere kann der Dom derart ausgebildet sein, daß bei Erreichen der vorbestimmten Druckbelastung der Dornkorpus eine Querschnittsverformung erfährt und dabei seine Länge verändert. Der Stauchungsteil, der als Hohlwandabschnitt ausgebildet sein kann, baucht radial aus, so daß sich die Domlänge verkürzt. Zweckmäßigerweise ist der Stauchungsteil elastisch ausgebildet, so daß der Dorn entsprechend der einwirkenden Druckbelastung hin- und herfährt.

Um einfach und tief in die Zahnzwischenräume eindringen zu können, besitzt der Dom vorzugsweise eine sich konisch verjüngende Spitze, deren Ende abgerundet und/oder abgeflacht sein kann, um Verletzungen des Mundhöhlenraumes vorzubeugen. Zweckmäßigerweise weist der Dom einen kreisförmigen Querschnitt auf. Der Kegelwinkel, unter dem sich die Spitze verjüngt, kann verschieden gewählt sein und ist an die Zahnzwischenräume angepaßt. Er kann zwischen 15 und 30 Grad gewählt sein und beträgt vorzugsweise etwa 22 Grad.

Die Dicke des Dorns am Fuß der sich konisch verjüngenden Spitze kann beträchtlich über der herkömmlicher Borsten liegen. Sie kann ein Vielfaches des Durchmessers herkömmlicher Borsten betragen. Die Länge des Dorns kann unterschiedlich gewählt sein. Sie ist so gering wie möglich, jedoch ausreichend, um in gewünschter Tiefe in die Zahnzwischenräume eindringen zu können.

Um die Zahnzwischenräume gründlich zu reinigen, paßt sich der Dom in Weiterbildung der Erfindung selbsttätig an die verschiedenen Konturen der Zahnzwischenräume an, so daß er sich an die jeweilige Zahnwandung anschmiegt und diese vollständig reinigt. Der Dom ist hierzu in seinem Querschnitt elastisch verformbar ausgebildet. Er kann zumindest an seiner Oberfläche aus einem elastischen Kunststoff bzw. aus Gummi bestehen.

Um härteren Zahnbelag, Plaques und dergleichen sorgfältig zu entfernen, besitzt der Dorn eine entsprechende Oberflächenrauhigkeit. Er kann hierzu aufgerauht sein. In Weiterbildung der Erfindung kann an der Oberfläche des Doms ein Borstenbesatz vorgesehen sein. Die Borsten können insbesondere an der radialen Umfangsfläche der sich konisch verjüngenden Spitze des Doms angeordnet sein. Der Dorn kann auch an seiner Stirnseite, insbesondere wenn diese abgeflacht bzw. abgerundet ist, Borsten besitzen, die nach vorne parallel zur Längsachse des Doms abstehen. Der Borstenbesatz bewirkt einen effizienten Abtrag von Speiseresten, Zahnbelägen und dergleichen.

Zweckmäßigerweise ist der Dorn im wesentlichen koaxial zur Bewegungsachse des Zahnbürstenkopfs angeordnet. Der Dorn wird vom Antrieb der Zahnbürste rotatorisch angetrieben. Insbesondere kann er drehfest an dem Trägerstück des Zahnbürstenkopfs verankert sein, so daß er sich zusammen mit diesem dreht. Durch seine Drehbewegung entfernt der Dorn in den Zahnzwischenräumen auch hartnäckigere Verschmutzungen, Beläge und dergleichen.

Zusätzlich oder alternativ zu der rotatorischen Drehung kann der Dorn in seiner Längsrichtung oszillierend angetrieben werden. Mit einer solchen Bewegung läßt sich zum einen das Eindringen in die Zahnzwischenräume einfach bewerkstelligen. Zum anderen wird eine zusätzliche Reinigungsbewegung erreicht.

In Weiterbildung der Erfindung sind an dem Zahnbürstenkopf neben dem beschriebenen Dorn weitere Reinigungswerkzeuge vorgesehen. Insbesondere sind eine Vielzahl von Borsten, vorzugsweise in Form mehrerer Borstenbüschel, an dem Trägerstück angebracht. Die Borstenbüschel übernehmen die Reinigung der an die Zahnzwischenräume angrenzenden Zahnwände. Vorzugsweise sind sie konzentrisch um den Dom herum angeordnet, so daß sie bei Eindringen des Doms in einen Zahnzwischenraum die angrenzenden Zahnflanken bearbeiten. Die Borstenbüschel sind gegenüber dem Dorn kürzer bzw. steht der Dom über die Arbeitsenden der Borstenbüschel vor, um die Interdentalreinigung besser bewirken zu können.

Die Erfindung wird nachfolgend anhand bevorzugter Ausführungsbeispiele und zugehöriger Zeichnungen näher erläutert. In den Zeichnungen zeigen: .
- **Figur 1**: eine schematische Schnittansicht durch einen Zahnbürstenkopf einer Zahnbürste gemäß einer bevorzugten Ausführung der Erfindung mit einem ein- und ausfahrbaren zentralen Dom zur Interdentalreinigung,
- **Figur 2**: eine Draufsicht auf den Zahnbürstenkopf aus Figur 1,
- **Figur 3**: eine schematische Schnittansicht eines Zahnbürstenkopfes ähnlich Figur 1 nach einer weiteren bevorzugten Ausführung der Erfindung, bei der die Spitze des Doms abgeflacht und mit nach vorne abstehenden Borsten versehen ist,
- **Figur 4**: eine schematische Schnittansicht eines Zahnbürstenkopfes nach einer weiteren bevorzugten Ausführung der Erfindung ähnlich Figur 1, wobei der Dom einen Hohlraumabschnitt mit einer elastisch stauchbaren Wandung besitzt,
- **Figur 5**: eine schematische Schnittansicht des Zahnbürstenkopfes gemäß Figur 4, wobei der Dorn in zusammengestauchtem, verkürztem Zustand dargestellt ist,
- **Figur 6**: eine schematische Schnittansicht eines Zahnbürstenkopfes nach einer weiteren bevorzugten Ausführung der Erfindung, wobei der Dom zur Interdentalreinigung in einen Zahnzwischenraum eingeführt dargestellt ist,
- **Figur 7**: eine schematische Schnittansicht ähnlich Figur 6, die die elastische Deformierbarkeit des Doms in seinem Querschnitt und das Anpassen bzw. Anschmiegen des Doms an die Wandungen des Zahnzwischenraumes zeigt, und
- **Figur 8**: eine schematische Schnittansicht eines Zahnbürstenkopfes, bei dem der Dorn zur Interdentalreinigung in einen Zahnzwischenraum eingeführt ist, wobei die Reinigung von Zahntaschen durch den Dorn umgebende Borstenbüschel dargestellt ist.

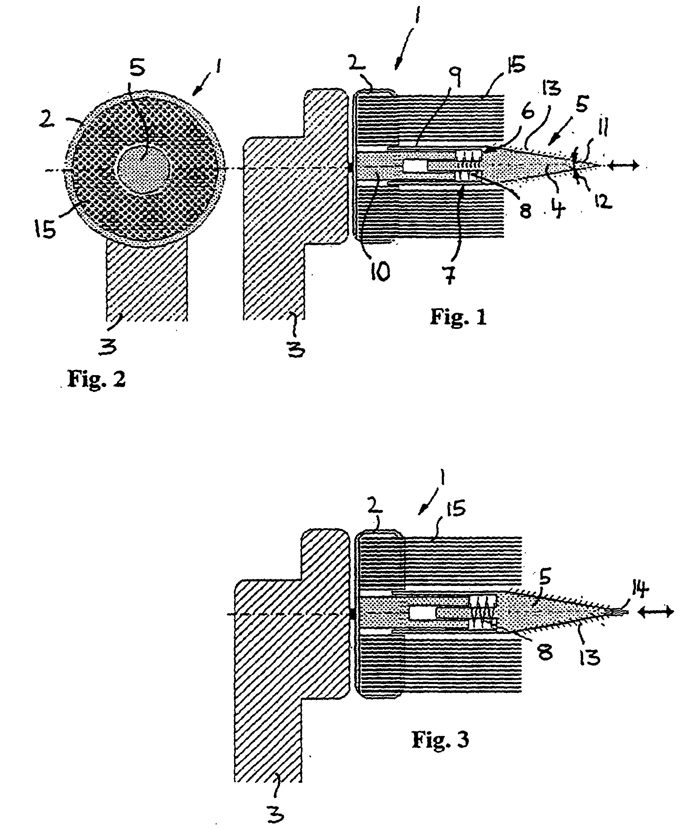

Der Zahnbürstenkopf 1 gemäß Figur 1 umfaßt ein kreisrundes, plattenförmiges Trägerstück 2, das auf ein nur schematisch dargestelltes Griffstück 3 einer elektrischen Zahnbürste aufsteckbar ist. Das Trägerstück 2 ist relativ zu dem Griffstück 3 um eine Bewegungsachse 4 drehbar gelagert. Mittels eines nicht dargestellten Antriebs in dem Griffstück 3, der vorzugsweise einen Elektromotor aufweist, kann das Trägerstück 2 in an sich bekannter Weise rotatorisch oszillierend angetrieben werden. Zusätzlich kann in an sich ebenfalls bekannter Weise von dem Antrieb eine oszillierende translatorische Stocherbewegung des Trägerstücks 2 entlang der Bewegungsachse 4 bewirkt werden, um ein besseres Eindringen in Zahnzwischenräume zu erreichen.

An dem Trägerstück 2 ist zentral ein Dom 5 gelagert, dessen Längsachse sich koaxial zur Bewegungsachse 4 des Trägerstücks 2 erstreckt. Gegebenenfalls könnte der Dom mit seiner Längsachse auch geringfügig versetzt zu der Bewegungsachse 4 angeordnet sein, um eine oszillierende Querbewegung zu erzeugen. Der Dorn 5 könnte auch zur Bewegungsachse 4 leicht schräg geneigt sein. Vorzugsweise jedoch besitzt er die in Figur 1 gezeigte Ausrichtung koaxial zur Bewegungsachse 4 des Trägerstücks 2.

Zwischen dem Dom 5 und dem Trägerstück 2 ist eine Schiebeführung 6 vorgesehen, die eine begrenzte translatorische Bewegung des Doms 5 parallel zur Bewegungsachse 4 ermöglicht. Wie Figur 1 zeigt, ist die Schiebeführung 6 als Teleskop ausgeführt bzw. der Dom 5 ist teleskopierbar. Ein von dem Trägerstück 2 vorstehender Führungszapfen sowie ein am Fuße des Dorns 5 ausgebildeter Hülsenabschnitt sind ineinanderschiebbar, so daß der Dorn 5 relativ zu dem Trägerstück 2 entlang der Bewegungsachse 4 beweglich ist. Die Schiebeführung 6 ist drehfest ausgebildet, das heißt, der Dorn 5 dreht sich zusammen mit dem Trägerstück 2 um die Bewegungsachse 4 und macht dessen oszillierende Rotationsbewegung mit.

Mittels einer Federeinrichtung 7 wird der Dom 5 in seine ausgefahrene Stellung, das heißt von dem Trägerstück 2 weggedrückt. Die Federeinrichtung 7 liegt im Inneren des Doms 5 und ist in die Schiebeführung 6 integriert. Eine Spiralfeder sitzt am Boden des Hülsenabschnitts 9 und steht gegen die Stirnseite des Führungszapfens 10 an (vgl. Figur 1). Mittels der Spiralfeder 8 läßt sich die Druckkraft, bei der der Dorn 5 nachgibt, präzise einstellen und darüber hinaus ein relativ langer Verfahrweg des Doms 5 erreichen.

Der Dorn 5 besteht aus einem elastischen Kunststoff bzw. aus Gummi, so daß er insgesamt elastisch ist.

Von seinem Fuß an dem Trägerstück 2 aus verjüngt sich der Dorn zu seinem vom Trägerstück abgewandten Ende hin. Er besitzt eine sich konisch verjüngende Spitze 11 mit kreisförmigem Querschnitt. Der Kegelwinkel 12 beträgt zwischen 20 und 25 Grad, insbesondere etwa 22 Grad.

Um eine gründlichere Entfernung von Plaques, Zahnbelag oder auch Speiseresten in den Zahnzwischenräumen zu erreichen, besitzt der Dorn 5 an seinen Arbeitsflächen einen Borstenbesatz. Von den Flanken der Spitze 11 stehen eine Vielzahl von Borsten 13 radial ab. Zusätzlich oder alternativ zu den radial abstehenden Borsten können Spitzenborsten 14 an dem Dom 5 vorgesehen sein (vgl. Figur 3). In diesem Fall ist die Spitze 11 vorzugsweise abgeflacht. Die Spitzenborsten 14 stehen in Längsrichtung, das heißt parallel zur Längsachse des Doms 5 von dessen Stirnseite nach vorne ab. Die Ausführung gemäß Figur 3 entspricht ansonsten der in den Figuren 1 und 2 dargestellten, so daß auf eine weitere Erläuterung verzichtet wird.

Wie die Figuren 1 und 2 zeigen, besitzt der Zahnbürstenkopf 1 neben dem zentralen Dom 5 eine Vielzahl von Borsten, die in Büscheln angeordnet sein können. Die Borsten 15 sind konzentrisch um den Dorn 5 herum an dem Trägerstück 2 befestigt. Sie stehen von diesem parallel zur Bewegungsachse 4 ab. Sie könnten jedoch auch geneigt, vorzugsweise nach innen zu dem Dorn 5 hin geneigt angeordnet sein. Gegebenenfalls könnte auch eine Neigung der Borsten 15 nach außen von dem Dorn 5 weg vorgesehen sein, um eine entsprechende Putzwirkung zu erreichen. Die freien Enden, das heißt die Arbeitsenden der Borsten 15, liegen in einer Ebene senkrecht zur Bewegungsachse 4 (vgl. Figur 1). Um ein besseres Eindringen in die Zahnzwischenräume zu erlauben, könnten die Arbeitsenden der Borsten 15 jedoch auch abgestuft mit nach außen hin abnehmender Borstenlänge vorgesehen sein, so daß die Borsten 15 eine konvexe, pyramidenförmige Arbeitsebene definieren. Um eine größere Putzwirkung an den Außenrändern, insbesondere in Zahnfleischtaschen zu erreichen, könnten die Borsten 15 auch eine konvexe Arbeitsebene definieren, wobei die außenliegenden Borsten eine größere Länge besitzen als näher zu dem Dorn 5 hin angeordnete Borsten 15.

Wie die Figur 1 zeigt, besitzt der Dorn 5 einen Durchmesser, der wesentlich größer ist als die Dicke der Borsten 15. Der Dorn 5 besitzt an seinem Fuß einen Durchmesser, der zwischen einem Sechstel und der Hälfte des Durchmessers des Trägerstücks 2, insbesondere etwa ein Viertel des Durchmessers des Trägerstücks 2 beträgt. Die Länge des Dorns 5 ist ebenfalls beträchtlich größer als die Länge der Borsten 15. Wie Figur 1 zeigt, steht die Spitze des Doms 5 etwa zwei Drittel der frei tragenden Länge der Borsten 15 über deren Arbeitsenden über.

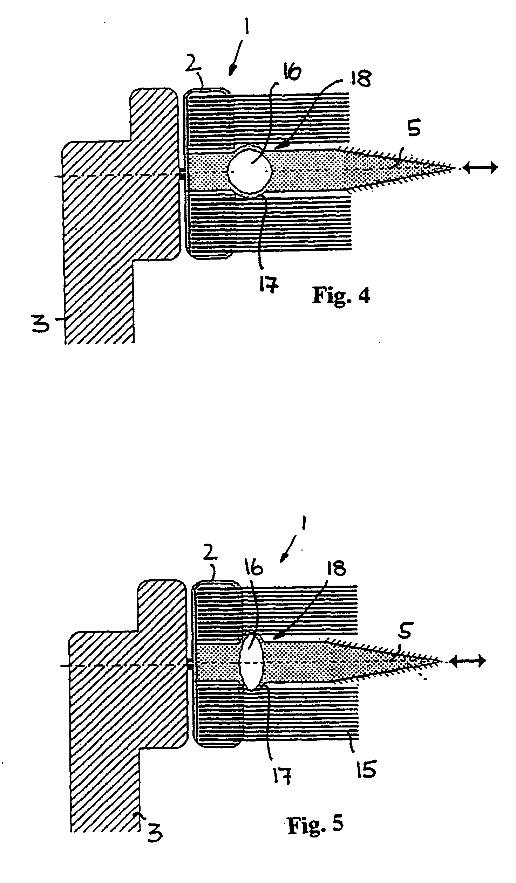

Eine zu den Figuren 1 bis 3 alternative Ausführungsform des Zahnbürstenkopfes 1 zeigt Figur 4, die sich durch ihre besondere Einfachheit auszeichnet. Anstelle des Federmechanismusses mit der Spiralfeder 8 ist der Dorn 5 selbst in seiner Längsrichtung federnd ausgebildet. Im Bereich des Fußes des Doms 5 ist ein Hohlraum 16 vorgesehen, um den herum der Dom 5 eine ausgebauchte Wandung 17 besitzt, die elastisch ausgebildet ist. Bei Beaufschlagung des Dorns 5 mit einer entsprechenden Druckkraft auf seine Spitze 11 baucht die Wandung 17 radial aus und verformt sich zu einer Ellipse, wie dies in Figur 5 gezeigt ist. Dementsprechend wird der Dom 5 gestaucht und in seiner Länge reduziert. Der elastische Stauchungsteil, der von dem Hohlraum 16 sowie dessen Wandung 17 gebildet wird, ist integral an den Dom 5 angeformt. Dieser ist insgesamt einstückig ausgebildet. Die mehrgliedrige Teleskopiereinrichtung gemäß der Ausführung nach Figur 1 kann entfallen. Hierdurch wird ein besonders einfacher und kostengünstiger Aufbau des Dorns 5 erreicht.

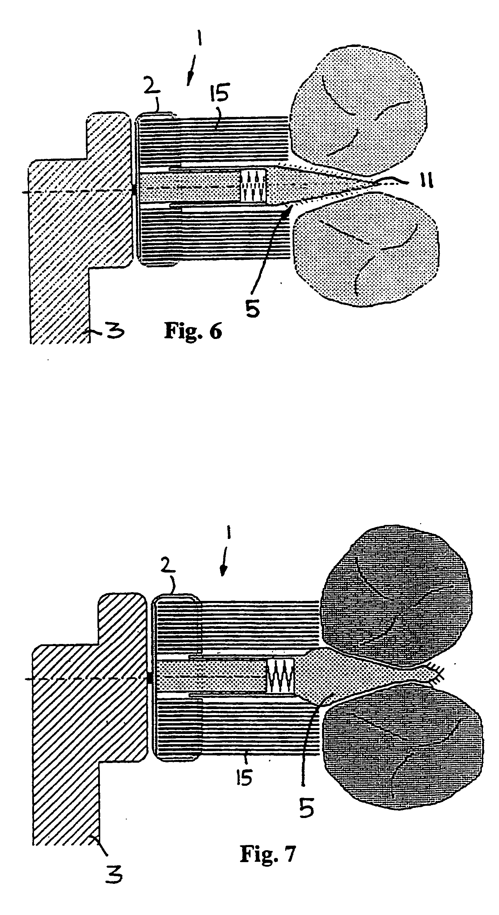

Nachfolgend wird die Funktion und die Wirkungsweise eines erfindungsgemäßen Zahnbürstenkopfes gemäß den Figuren 6 bis 8 näher erläutert.

Wie Figur 6 zeigt, kann der Zahnbürstenkopf 1 mit seinem Dorn 5 präzise in einen Zahnzwischenraum eingeführt werden. Das Überstehen der Spitze 11 des Dorns über die Arbeitsenden der den Dorn 5 umgebenden Borsten 15 ist derart bemessen, daß die Arbeitsenden der Borsten 15 an den den jeweiligen Zwischenraum benachbarten Zahnflanken anstehen, wenn der Dom 5 vollständig in den Zahnzwischenraum eingeschoben ist. Hierdurch können die Borsten 15 die an den Zahnzwischenraum angrenzenden Zahnwandungen reinigen. Der Zahnbürstenkopf 1 erfährt dabei eine oszillierende rotatorische Bewegung um seine Bewegungsachse 4, die gegebenenfalls von einer Stocherbewegung entlang der Bewegungsachse überlagert sein kann. Der Dorn 5 ist dabei an die entsprechende Bewegung angekoppelt.

Durch die elastische Nachgiebigkeit des Doms 5 in Richtung seiner Längsachse wird vermieden, daß der Dom 5 zu fest in die Zahnzwischenräume eingeschoben wird. Sobald die Spitze 11 mit ihren Flanken an den Wandungen der Zähne im Zahnzwischenraum ansteht, fährt der Dom 5 teleskopartig entgegen der Federvorspannung ein, wenn die Zahnbürste weiter, das heißt noch fester gegen die Zähne gedrückt wird. Hierdurch werden Verletzungen vermieden. Die gewünschte Andrückkraft des Doms 5 stellt sich selbsttätig ein.

Wie Figur 7 zeigt, ist der Dorn 5 gummiartig elastisch ausgebildet. Er ist in seinem Querschnitt deformierbar und elastisch nachgiebig, so daß er sich an die Kontur der Zahnwandung in dem jeweils zu reinigenden Zahnzwischenraum anpaßt. Die Flanken des Dorns 5 schmiegen sich paßgenau an die gegenüberliegenden Wandungen der Zähne an. Hierdurch kann eine gründliche Reinigung erreicht werden. Überbeanspruchungen der Zähne werden vermieden, und der Reinigungsvorgang wird als sanft und angenehm empfunden.

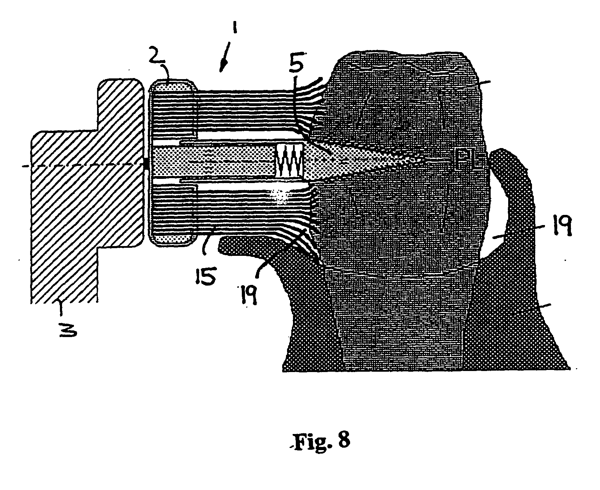

Mittels der den Dom 5 umgebenden Borsten 15 ist es insbesondere möglich, Zahnfleischtaschen von bakteriellem Belag, Speiseresten und dergleichen effizient zu reinigen. Figur 8 zeigt, daß beim Einführen des Dorns 5 in einen Zahnzwischenraum die den Dom 5 umgebenden Borsten 15 sich zwischen das Zahnfleisch und den entsprechenden Zahn schieben. Das Zahnfleisch wird dabei leicht angehoben, so daß die Borsten 15 in die entsprechende Zahnfleischtasche 19 eindringen. Die Borsten 15 können an der Wandung des entsprechenden Zahnes leicht umbiegen. Hierdurch dringen sie bis an den Grund der Zahnfleischtasche vor (vgl Figur 8). Insbesondere durch die Nachgiebigkeit des Dorns 5 in seiner Längsrichtung ist es möglich, den Zahnbürstenkopf 1 entsprechend an den Zahn anzudrücken, so daß die Borsten diese zusätzliche Reinigungsfunktion bewirken.

## Patentansprüche

1. Zahnbürstenkopf für ein einen Antrieb umfassendes Griffstück (3) einer Zahnbürste, wobei der Zahnbürstenkopf ein Trägerstück (2) aufweist, an dem Trägerstück (2) ein Dom (5) sowie mehrere Borsten (15) oder Borstenbüschel angeordnet sind, und der Dom (5) in Richtung seiner Längsachse relativ zum Trägerstück (2) verschieblich gelagert ist, **dadurch gekennzeichnet, daß** der Dom (5) unter der Wirkung einer Vorspannung in eine ausgefahrene Stellung vorgespannt ist und infolge der beim Zahnputzvorgang auftretenden Andruckkraft in eine eingefahrene Stellung verfahren wird.

2. Zahnbürstenkopf nach Anspruch 1, **dadurch gekennzeichnet, daß** der Dorn (5) bei Abnahme der Andruckkraft wieder ausgefahren wird.

3. Zahnbürstenkopf nach einem der vorhergehenden Ansprüche, wobei eine Federeinrichtung (7) zur Erzeugung der Vorspannung des Dorns (5) vorgesehen ist.

4. Zahnbürstenkopf nach einem der vorgehenden Ansprüche, wobei der Dom (5) einen integral angeformten Stauchungsteil (18) aufweist, wobei vorzugsweise der Stauchungsteil elastisch ausgebildet ist.

5. Zahnbürstenkopf nach einem der vorhergehenden Ansprüche, wobei der Dom (5) eine sich konisch verjüngende Spitze (11), insbesondere mit kreisförmigem Querschnitt, besitzt.

6. Zahnbürstenkopf nach einem der vorhergehenden Ansprüche, wobei der Dorn (5) insbesondere in seinem Querschnitt elastisch verformbar ausgebildet ist, vorzugsweise aus einem elastischen Kunststoff und/oder Gummi besteht.

7. Zahnbürstenkopf nach einem der vorhergehenden Ansprüche, wobei der Dom (5) mit Borsten (13) besetzt ist, vorzugsweise radial abstehende und/oder stimseitig angebrachte Borsten aufweist.

8. Zahnbürstenkopf nach einem der vorhergehenden Ansprüche, wobei der Dorn (5) koaxial zur Bewegungsachse (4) des Zahnbürstenkopfs angeordnet ist.

9. Zahnbürstenkopf nach einem der vorhergehenden Ansprüche, wobei der Dom (5) vom Antrieb der Zahnbürste rotatorisch antreibbar ausgebildet, vorzugsweise drehfest mit dem Trägerstück (2) verbunden ist.

10. Zahnbürstenkopf nach einem der vorhergehenden Ansprüche, wobei eine Vielzahl von Borsten (15), insbesondere mehrere Borstenbüschel, an dem Trägerstück (2) neben dem Dorn (5) befestigt sind, vorzugsweise um den Dorn (5) herum konzentrisch und/oder exzentrisch angeordnet sind.

11. Zahnbürste mit einem einen Antrieb aufweisenden Griffstück (3) in Kombination mit einem Zahnbürstenkopf (1) nach einem der vorhergehenden Ansprüche.

## Claims

1. A toothbrush head for a toothbrush handle (3) comprising a drive, said toothbrush head including a carrier piece (2), said carrier piece (2) having arranged on it a spike (5) and several bristles (15) or bristle tufts, and said spike (5) being mounted for sliding motion in the direction of its longitudinal axis relative to said carrier piece (2), **characterized in that** the spike (5) is biased into an extended position under the action of a biasing force and is caused to occupy a retracted position as a result of the force applied during the tooth cleaning operation.

2. The toothbrush head according to claim 1, **characterized in that** the spike (5) is extended again when the applied force is reduced.

3. The toothbrush head according to any one of the preceding claims, wherein provision is made for a spring arrangement (7) for producing the bias of the spike (5).

4. The toothbrush head according to any one of the preceding claims, wherein the spike (5) includes a compression element (18) integrally formed thereon, said compression element being preferably of an elastic configuration.

5. The toothbrush head according to any one of the preceding claims, wherein the spike (5) has a conically tapering tip (11), in particular with a circular cross section.

6. The toothbrush head according to any one of the preceding claims, wherein the spike (5) is constructed to be elastically deformable particularly in its cross section, being preferably made of an elastic plastic and/or rubber material.

7. The toothbrush head according to any one of the preceding claims, wherein the spike (5) is set with bristles (13), preferably with radially projecting bristles and/or bristles attached to the spike's forward end.

8. The toothbrush head according to any one of the preceding claims, wherein the spike (5) is arranged in a direction coaxial with the motion axis (4) of the toothbrush head.

9. The toothbrush head according to any one of the preceding claims, wherein the spike (5) is adapted to be driven to rotate by the drive of the toothbrush, being preferably connected with the carrier piece (2) in a non-rotating relationship.

10. The toothbrush head according to any one of the preceding claims, wherein a multiplicity of bristles (15), in particular several bristle tufts, are affixed to the carrier piece (2) adjacent to the spike (5), being preferably arranged around the spike (5) in a concentric and/or eccentric array.

11. A toothbrush with a handle (3) including a drive, in combination with a toothbrush head (1) according to any one of the preceding claims.

## Revendications

1. Tête de brosse à dents destinée à une pièce de préhension (3) d'une brosse à dents, munie d'un entraînement, la tête de brosse à dents comprenant une pièce de support (2), un mandrin (5) ainsi que plusieurs poils de brosse (15) ou touffes de poils de brosse étant disposés sur la pièce de support (2), et le mandrin (5) étant monté de manière à pouvoir coulisser dans la direction de son axe longitudinal, par rapport à la pièce de support (2),
**caractérisée en ce que** le mandrin (5) est précontraint dans une position sortie sous l'effet d'une tension de précontrainte, et est déplacé dans une position rentrée ou rétractée suite à la force d'appui apparaissant lors de l'opération de nettoyage ou de brossage des dents.

2. Tête de brosse à dents selon la revendication 1,
**caractérisée en ce que** le mandrin (5) est à nouveau déplacé vers sa position sortie lorsque la force d'appui diminue.

3. Tête de brosse à dents selon l'une des revendications précédentes, un dispositif de ressort (7) étant prévu pour engendrer la précontrainte du mandrin (5).

4. Tête de brosse à dents selon l'une des revendications précédentes, le mandrin (5) présentant une partie (18) compressible par refoulement, qui est formée de façon intégrante au mandrin, la partie compressible par refoulement étant de préférence d'une configuration élastique.

5. Tête de brosse à dents selon l'une des revendications précédentes, le mandrin (5) possédant une pointe (11) se rétrécissant de manière conique, qui présente notamment une section transversale de forme circulaire.

6. Tête de brosse à dents selon l'une des revendications précédentes, le mandrin (5) étant d'une configuration élastiquement déformable, notamment en section transversale, et étant de préférence réalisé en une matière plastique élastique et/ou en caoutchouc élastique.

7. Tête de brosse à dents selon l'une des revendications précédentes, le mandrin (5) étant muni de poils de brosse (13), de préférence des poils de brosse en saillie radiale et/ou placés côté frontal.

8. Tête de brosse à dents selon l'une des revendications précédentes, le mandrin (5) étant disposé coaxialement à l'axe de mouvement (4) de la tête de brosse à dents.

9. Tête de brosse à dents selon l'une des revendications précédentes, le mandrin (5) étant réalisé de manière à pouvoir être entraîné en rotation par l'entraînement de la brosse à dents, et étant de préférence lié en rotation à la pièce de support (2).

10. Tête de brosse à dents selon l'une des revendications précédentes, un grand nombre de poils de brosse (15), notamment plusieurs touffes de poils de brosse, étant fixés à la pièce de support (2) à côté du mandrin (5), en étant disposés de préférence autour du mandrin (5) de manière concentrique et/ou excentrique.

11. Brosse à dents comprenant une pièce de préhension (3) munie d'un entraînement, en combinaison avec une tête de brosse à dents selon l'une des revendications précédentes.
